# EUROPEAN PATENT SPECIFICATION

(11) **EP 1 752 712 B1**
(45) Date of publication and mention of the grant of the patent: **28.04.2010**
(21) Application number: 05425591.4
(22) Date of filing: 10.08.2005
(51) Int. Cl.: F24C 15/20, H04L 12/28

(54) **Hood with telephonic communication functions**
Dunstabzugshaube mit Kommunikationsfunktion
Hotte de cuisine avec des fonctions de communication

(43) Date of publication of application: 14.02.2007
(73) Proprietor: Best S.p.a., I-60044 Fabriano AN (IT)
(72) Inventor: Scattolini, Luigi, 62027 San Severino Marche (MC) (IT); Mulattieri, Renzo, 60043 Cerreto d'Esi (IT)
(74) Representative: Dini, Roberto

(56) References cited:
- WO-A-2005/052453
- US-A- 6 047 049

## Description

The present invention relates to a hood, in particular for a household kitchen.

Such hoods are used to remove, in particular by suction, fumes and steam from the environment where the hood is located and is operating.

The present invention arises from reflections made by the Applicant concerning those cases in which, for instance, a housewife receives and has to answer a call on her cellular telephone or fixed home telephone, while having her hands busy carrying out household duties such as, for example, cooking food on the burners of the hob, manually kneading dough, or laying the table. Such cases are getting more and more frequent as the use of telephones, in particular cellular telephones, is constantly increasing.

Nowadays, the housewife can either give up answering the call or suspend the cooking, for example by putting out the flame to prevent the food from overcooking or burning, or wash her hands quickly to be able to pick up the telephone handset, risking however to be too late and miss the call.

A similar problem is encountered by the housewife whenever she needs to make a call, the housewife must suspend her work, wash her hands if necessary, and then pick up the telephone handset, dial the desired number and hold the handset in her hand during the conversation.

The Japanese Patent Application No. 2003009256 discloses a household conditioning apparatus comprising a short-distance radio transmission/reception device being operated through signals sent by a cellular telephone. The system can recognize the cellular telephone from which the control signal has been sent and activate those functions corresponding to that control signal. An important aspect of the solution described in the above Japanese Patent Application consists in the use of the Bluetooth technology for the transmission and/or reception of signals.

The American Patent Application No. 2003161490 discloses a household hood comprising a voice control unit, which includes a microphone and a sensor working as a motion detector. When the motion signal detected by the sensor is received, the control unit is adapted to turn on the microphone, making it ready for receiving a voice signal coming from the user. The received voice signal is then sent to a voice analysis unit adapted to activate the corresponding function of the hood.

These known solutions, which have been cited herein merely for providing all information available, do not face or solve the above-described problems at all.

The International Patent Application No. WO 2005/052453 discloses a multifunctional aspirating hood for household use comprising, in the front part of its body (1), a multimedia apparatus (2) including a monitor (3) as a terminal unit of interaction with a plurality of devices useful when using the kitchen and managing the home. The monitor (3) may comprise of a touch screen for user input. The multimedia apparatus (2) may provide the following services: television (TV), video telephone, video intercom, possibility of occupying children and elderly persons, safeguarding the house and giving alarm, internet use, interpreting users voice commands, a graphical user interface with windows technique and a diagnostic software to call service for repair.

The above mentioned hood incorporates a video telephone receiver with related card as well as a remote transmitter of telephone signals.

The above mentioned hood does not provide the possibility to establish a telephone communication through a user telephone terminal being a cordless or cellular telephone.

The general object of the present invention is to solve the above-described drawbacks, thus making it easier for a user working in a kitchen to answer or make telephone calls **through a user telephone terminal** .

Said object is achieved through a hood incorporating the features of the annexed claims, which form an integral part of the present description.

The idea at the basis of the present invention is to use the hood to facilitate telephone communications; this is advantageous because, when a person is working in a kitchen, he/she often stands in front of the hob, therefore facing the hood; moreover, the hood is located in a very good position for voice detection and emission.

Further features and advantages of the present invention will become apparent from the following detailed description, provided as a non-limiting example and referring to the annexed drawings, wherein:
- Fig. 1 shows a schematic representation of a hood according to the prior art;
- Fig. 2 shows a block diagram of the circuit system of a hood according to the prior art;
- Fig. 3 shows a schematic representation of a hood according to the present invention;
- Fig. 4 shows a first block diagram of the circuit system of a hood according to the present invention;
- Fig. 5 shows a second block diagram of the circuit system of a hood according to the present invention;
- Fig. 6 shows a third block diagram of the circuit system of a hood according to the present invention;
- Fig. 7 shows a fourth block diagram of the circuit system of a hood according to present invention.

Both said description and said drawings are to be considered as non-limiting examples.

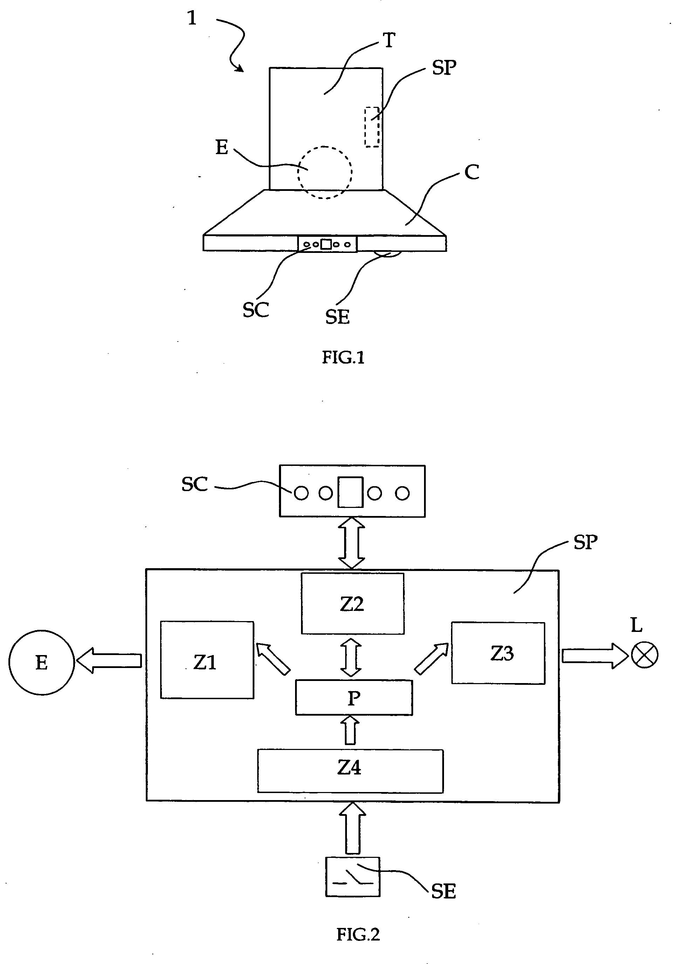

As to the description of the annexed drawings, it can be noticed that Fig. 1 represents, in a schematic and simplified manner, a typology of kitchen hood 1 according to the prior art.

Hood typologies may be grouped into several families depending on their structure. Some examples are: standard suction hoods, also called classic hoods, being positioned on the wall directly above the hob, or under a wall unit, or inserted between kitchen elements; pull-out or sliding hoods equipped with a self-moving glass or metal carriage, which allows when in use to increase the fume capture area and can be retracted when not in use in order to align the hood perfectly with the other kitchen elements; or chimney hoods mainly used when a decorative touch is to be added to the kitchen environment. There are also recirculating, exhausting or convertible system hoods; in any case, the above typologies can be generally represented by the configuration shown in Fig. 1.

The configuration of Fig. 1 shows a hood 1 comprising:
- a casing C, i.e. the external structure enclosing all of the elements making up the hood. Said casing is generally made of metal sheet (e.g. painted steel, stainless steel, copper or brass);
- an electromechanic assembly for motor-ventilation (Fig. 1 schematically shows the motor E only whereas the fan is not shown);
- external sensors SE for detecting, for example, the presence of fumes or the temperature on the hob;
- an operation board SC with press buttons allowing a user to activate or deactivate some functions of the hood;
- a control board SP adapted to control and adjust the functionalities of the hood.

Fig. 2 shows a block diagram which specifies more in detail the elements constituting the control board SP of a typical hood, e.g. the hood 1 of Fig. 1, being known to the person skilled in the art. Such a configuration comprises:
- a control zone Z1 for the motor E, adapted to control the activation, deactivation and speed adjustment of the motor E;
- a control interface zone Z2, adapted to perform the commands input by a user through the operation board SC;
- a light control zone Z3, adapted to turn on/off the lights L and possibly adjust their brightness;
- a zone Z4 for controlling the external sensors SE, such as, for example, smoke sensors, temperature sensors or (human) presence detectors.
- a microprocessor P, adapted to manage and transmit data in order to establish the communication among said zones Z1, Z2, Z3, Z4.

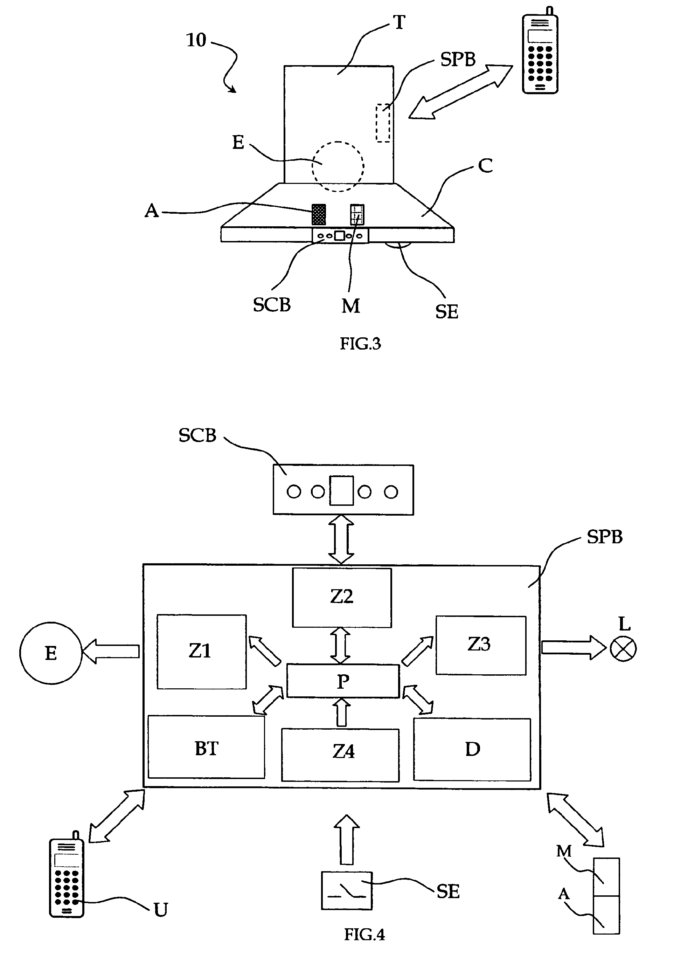

Fig. 3 schematically shows a kitchen hood 10 according to the present invention, which comprises:
- a casing C;
- an electromechanic assembly for motor-ventilation (Fig. 3 schematically shows only the motor E whereas the fan is not shown);
- external sensors SE;
- an operation board SCB;
- a control board SPB, adapted to control and adjust the functionalities of the hood 10.

According to the present invention, the hood 10 also comprises:
- a speaker A and
- a microphone M.

The figures are provided essentially as non-limiting examples; in fact, according to the present invention the hood might comprise, for instance, more than one speaker; this feature would be advantageous for improving sound diffusion.

Fig. 4 shows a block diagram specifying more in detail the elements constituting the control board SPB of the hood 10 according to the present invention. Such a configuration comprises:
- a control zone Z 1 for the motor E;
- an operation interface zone Z2, adapted to perform the commands input by a user through the operation board SCB;
- a light control zone Z3, adapted to turn on/off the lights L and possibly adjust their brightness;
- a zone Z4 for controlling the external sensors SE, such as, for example, smoke sensors, temperature sensors or (human) presence detectors.
- a microprocessor P, which represents the core of the control unit of the hood 10, adapted to manage and transmit data in order to establish the communication among said zones Z1, Z2, Z3, Z4.

For equivalent components, Fig. 3 and Fig. 4 use the same references as Fig. 1 and Fig. 2.

In general, the hood according to the present invention comprises means adapted to receive and/or transmit telephone communication signals, in particular telephone communication voice signals; such signals may even be directly telephone signals, thus comprising not only voice signals, but also telephone control signals.

In the illustrated examples, said means correspond to the elements BT, M, A, D, are adapted to receive and/or transmit telephone communication voice signals by radio and they are comprised in the control board SPB, wherein:
- BT is a hardware and/or software communication interface, adapted to receive and/or transmit said signals through Bluetooth technology;
- M is a microphone adapted to receive sounds, in particular voice;
- A is a speaker adapted to emit sounds, in particular voice, and
- D is a hardware and/or software audio interface adapted to activate and/or deactivate the microphone M and the speaker A.

As already mentioned, communication voice signals are advantageously transmitted by radio through Bluetooth technology.

The Bluetooth technology is a short-distance radio communication standard initially created and developed in order to provide a wireless connection among a wide range of products. Said technology was designed to satisfy certain basic requirements, such as: providing a low-cost system being easily accessible to anybody; developing globally a working system throughout the world; allowing radio transmission having small size and low power absorption; providing a connection supporting both voice signals and data traffic. This latter aspect allows to obtain a good level of compatibility among apparatus of different typologies and applications, such as a household appliance, e.g. a kitchen suction hood, and a telephone apparatus, e.g. a cellular or cordless telephone.

In the specific case of the present invention, the communication interface BT is adapted to communicate in transmission and/or reception with a user terminal U, in particular a cordless or cellular telephone.

Of course, according to the above description of the Bluetooth technology, the user terminals U must also comprise said hardware and/or software interface based on Bluetooth technology so as to compatible with the means BT, M, A, D comprised in the hood 10.

If these means are compatible, then it is possible to establish a communication between the two apparatus according to the present invention.

According to the above description, Bluetooth technology permits to transmit and/or receive both voice and data signals; in particular, the communication interface BT is adapted to receive communication voice signals from said user terminal U and to transmit a data signal to said control unit P; said control unit P being adapted to activate said microphone M and said speaker A after the beginning of a telephone communication, and to deactivate said microphone M and said speaker A after the end of said telephone communication.

The communication interface BT recognizes, through Bluetooth technology, the specific signals of a phone call received by a user terminal U, in particular a telephone, such as for example the sound of a telephone chimes. After having intercepted said signal, the communication interface BT sends a data signal to the control unit P, which then sends control data signals to the microphone M and the speaker A in order to put said microphone M and said speaker A in a condition adapted to receive and transmit communication voice signals.

Said voice signals correspond to a telephone communication being received and/or transmitted by said user terminal U, i.e. by said telephone. Together with the activation of the microphone M and the speaker A, the control unit P is adapted to activate said telephone communication; this activation, i.e. the establishment of the communication, takes place through the transmission of a signal from the control unit P to the user terminal U through the communication interface BT.

According to the present invention, the hood 10 comprises in its electromechanic assembly at least a motor E being adapted to provide the hood suction function. Said control unit P is adapted to reduce the speed of rotation of said motor E in order to reduce the noise, in particular the noise caused by the rotation of said motor E and/or by the suction provided by the hood, as soon as the communication is established. Typically, according to the present invention, the control unit P verifies the operating condition of the electromechanic assembly, and in particular it verifies the state of the motor E, i.e. whether the motor is off or on and its operating speed.

It is known that a motor and more in general any mechanic or electromechanic device generates noise during its operation. Therefore also the hood being the subject of the present invention, comprising a motor E adapted to operate a fan, generates noise being dependent on its operating speed. Typically, a hood is prearranged for working at several speeds, so as to allow the user to select the speed being most suited to any specific condition. Inevitably, said noise adversely affects the speaker A, not allowing the user to hear a clear and undisturbed communication. Said noise adversely affects the microphone M as well, in that said microphone M receives a voice signal being disturbed by background noise. Therefore, according to the present invention, the control unit P is adapted to reduce the operating speed of the motor E to its minimum speed; said speed reduction being adapted to reduce background noise for the whole duration of said telephone communication.

The user is thus advantageously put in the best condition for having a conversation without being disturbed when listening and/or holding a dialogue by a high level of noise generated by the motor of the hood 10; the operation of the motor E and therefore the suction function of the hood are neither interrupted nor suspended during a call, but just slowed down.

The control unit P is adapted to restore, in particular increase, the speed of rotation of said motor E at the end of said telephone communication. This means that the motor E and therefore the ventilation are brought back to the same conditions existing before the activation of said telephone communication.

The control unit P, in fact, memorizes the state of the motor of the hood 10 when a telephone communication is activated, so that at the end of said communication it will restore the previously memorized motor speed.

According to the present invention, the hood 10 therefore provides a "hands-free" function being adapted to allow a user, who for example is busy cooking food, to have a telephone conversation without having to use his/her hands to hold the user terminal U close to his/her ear.

The control unit P is adapted to establish, in particular to activate, a telephone communication directly or indirectly, in particular through a user terminal U. In fact, according to the present invention the hood 10 is adapted to establish a telephone communication either directly, e.g. by cable over the household telephone wiring, or indirectly, e.g. by radio through a cordless or cellular telephone to which it is connected through Bluetooth technology.

In the first case, i.e. direct telephone communication, it is advantageous to integrate into the structure of the hood a telephone apparatus adapted to receive and/or transmit telephone signals. In such a case, the hood may comprise within its structure a telephone socket for connecting a telephone set to the household telephone wiring. According to this configuration, the hood is therefore not only adapted to provide a "hands-free" function, but also to allow a user to make a telephone call; moreover, thanks to the integration of a telephone apparatus into the structure of the hood, after having dialed the desired telephone number the user can, , have a conversation without having to use his/her hands, thereby having the possibility of carrying out tasks involving the use of both hands.

In case of integration of or connection to a voice-call user terminal, i.e. a terminal which selects the number to be dialed through a voice command given by the user, the user can advantageously make and conduct a call while continuing to carry out another task with his/her hands (e.g. cooking, kneading dough).

At the end of the telephone call, the reception of the voice signal by the microphone M and the transmission of the voice signal by the speaker A are interrupted; thanks to the signal sent by the audio interface D, the control unit is adapted to interrupt the telephone call.

The telephone is thus put in a condition allowing it to receive a new call.

It is apparent that the above-described invention is susceptible of many changes and variations within the scope of the inventive concept.

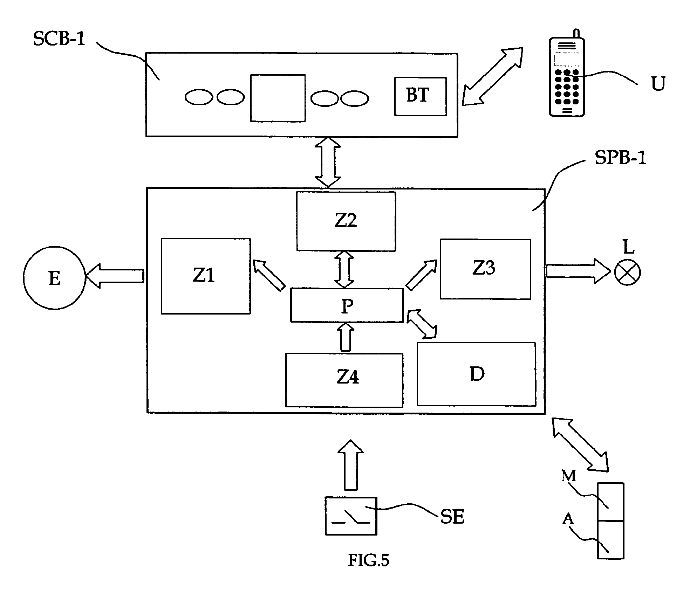

A number of possible changes to the circuit system of Fig. 4, relating to the arrangement of the various circuit elements, are shown in Figs. 5 to 8.

The diagram of Fig. 5 differs from that of Fig. 4 essentially in the fact that the communication interface BT is located on the operation board, indicated with SCB-1, rather than on the control board, indicated with SPB-1.

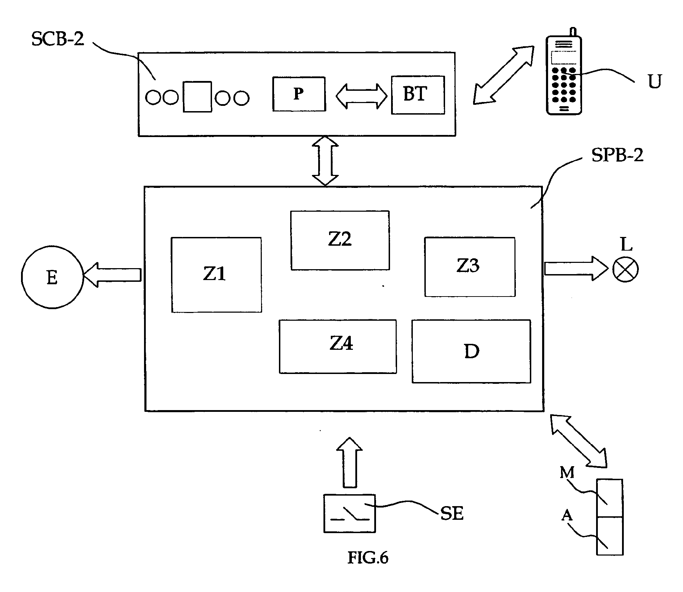

The diagram of Fig. 6 differs from that of Fig. 5 essentially in the fact that the microprocessor P, which is the core of the control system, is located on the operation board, indicated with SCB-2, rather than on the control board, indicated with SPB-2.

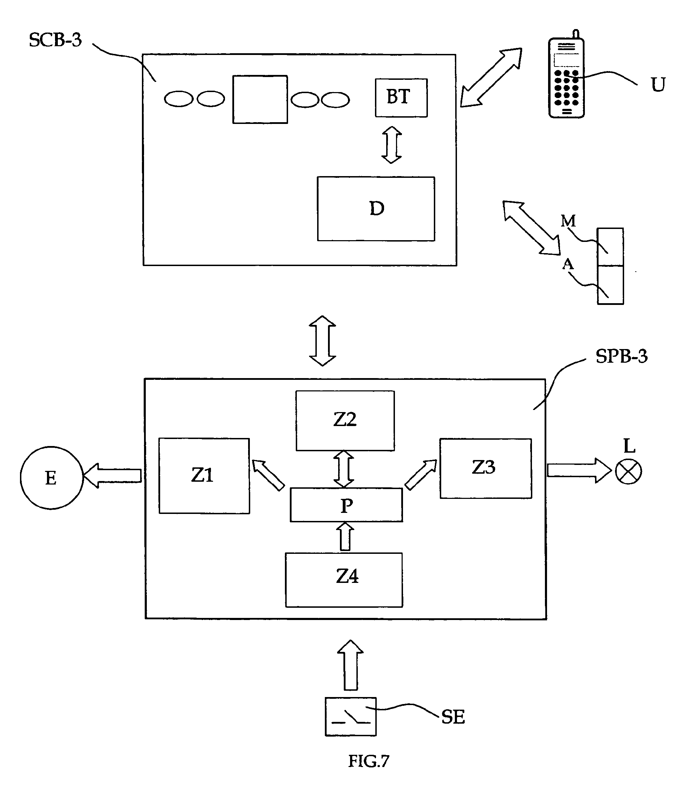

The diagram of Fig. 7 differs from that of Fig. 5 essentially in the fact that the audio interface D is located on the operation board, indicated with SCB-3, rather than on the control board, indicated with SPB-3.

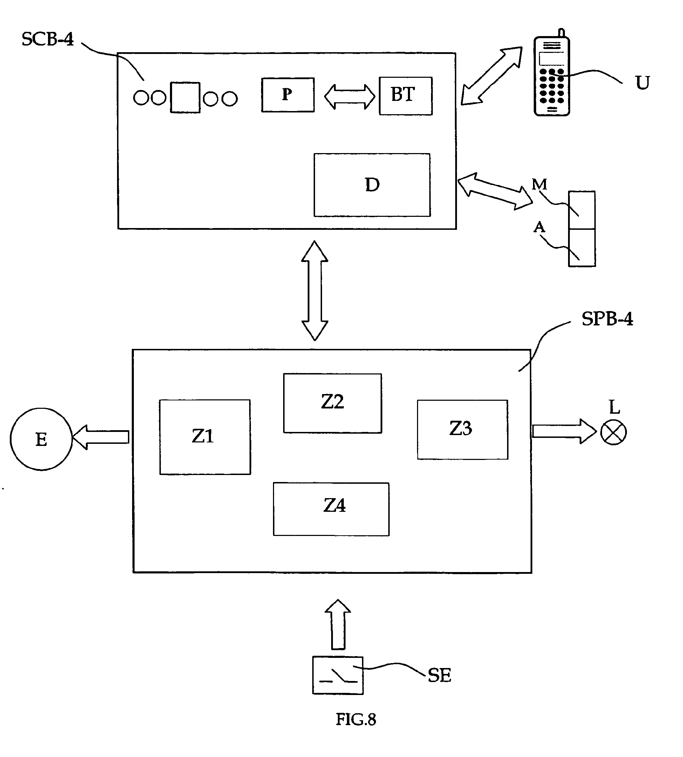

The diagram of Fig. 8 differs from that of Fig. 7 essentially in the fact that the microprocessor P, which is the core of the control system, is located on the operation board, indicated with SCB-4, rather than on the control board, indicated with SPB-4.

Of course, the above changes imply modifications (which can be made by a qualified electronic technician) to the connections and signals between the operation board and the control board, to the output and input connections and signals of said boards, and to the internal connections and signals of said boards.

Other possible changes and additions relate to the functionalities of the hood according to the present invention.

Since the hood according to the present invention may employ an audio interface, said interface may advantageously be used not only for telephone communications, but also for providing a voice control of the hood, e.g. for controlling its motor and/or its lights.

The hood according to the present invention may be designed for providing videotelephone communication, thus being adapted to receive and/or transmit voice signals as well as video signals. In this case, the hood will have to be suitably fitted with an image display device and/or an image detection device.

The hood according to the present invention may be designed for managing not only voice signals, but also data signals related to text messages, in particular SMS messages, and/or image messages, in particular MMS messages. In this case, the hood will have to be suitably fitted with a device for displaying said messages.

It is worth pointing out that, within the scope of the present invention, the telephone communication signals may also be such as to remain inside the same building or apartment, i.e. those used for providing, for example, (audio and/or video) intercom or (audio and/or video) entry phone functions.

Finally, all the above-described elements may be replaced with other technically equivalent elements without departing from the scope of the present invention.

## Claims

1. Hood (10), in particular for a household kitchen, comprising means (BT,M,A,D) adapted to receive and/or transmit telephone communication signals, in particular telephone communication voice signals, and a control unit (P) connected to said means (BT,M,A,D) and adapted to control them, **characterized in that** said means (BT,M,A,D) are adapted to communicate in transmission and/or reception with a user terminal (U) being a cordless or cellular telephone, and **in that** said control unit (P) is adapted to establish a telephone communication through said user terminal (U).

2. Hood (10) according to claim 1, **characterized in that** said means (BT,M,A,D) adapted to receive and/or transmit said signals by radio.

3. Hood (10) according to claim 2, wherein said means (BT,M,A,D) comprise a hardware and/or software communication interface (BT) adapted to receive and/or transmit said signals through Bluetooth technology.

4. Hood (10) according to claim 1 or 2 or 3, wherein said means (BT,M,A,D) comprise at least one microphone (M) adapted to receive sound, in particular voice.

5. Hood (10) according to claim 1 or 2 or 3 or 4, wherein said means (BT,M,A,D) comprise at least one speaker (A) adapted to emit sound, in particular voice.

6. Hood (10) according to claim 4 or 5, wherein said means (BT,M,A,D) comprise a hardware and/or software audio interface (D) adapted to activate and/or deactivate said at least one microphone (M) and/or said at least a speaker (A).

7. Hood (10) according to any of the previous claims, **characterized in that** it comprises a control unit (P) of the microprocessor type being connected to said means (BT,M,A,D) and adapted to control them.

8. Hood (10) according to claims 6 and 7, wherein said control unit (P) adapted to activate said microphone (M) and said speaker (A) after the beginning of a telephone communication, and to deactivate said microphone (M) and said speaker (A) after the end of said telephone communication.

9. Hood (10) according to any of the previous claims, wherein said control unit (P) is adapted to establish a telephone communication either directly or directly through said user terminal.

10. Hood (10) according to any of the previous claims and comprising at least a motor (E) adapted to remove air from the place where the hood is located, **characterized in that** it comprises a control unit (P) adapted to reduce the speed of rotation of said motor (E) in order to reduce its noise, in particular the noise caused by the rotation of said motor (E) and/or by the suction provided by the hood, after a telephone communication is established.

11. Hood (10) according to claim 10, **characterized in that** said control unit (P) is adapted to restore, in particular increase, the speed of rotation of said motor (E) after the end of said telephone communication.

12. Hood according to any of the previous claims, wherein said telephone communication signals are voice and video signals for videotelephone communication.

13. Hood according to claim 12, **characterized in that** it comprises an image display device and/or an image detection device in order to provide videotelephone communications.

14. Hood according to any of the previous claims, wherein said telephone communication signals further comprise data being related to text messages, in particular SMS messages, and/or image messages, in particular MMS messages.

15. Hood according to claim 14, **characterized in that** it comprises a device for displaying said messages.

## Patentansprüche

1. Haube (10), insbesondere für eine Haushaltsküche, wobei die Haube Mittel (BT, M, A, D) zum Empfangen und/oder Übertragen von Telefon- Kommunikations-Signalen, insbesondere von Telefon-Kommunikations-Sprachsignalen und eine Steuereinheit (P) aufweist, die mit den Mitteln (BT, M, A, D) verbunden ist und zum Steuern derselben eingerichtet ist, **dadurch gekennzeichnet, dass** die Mittel (BT, M, A, D) eingerichtet sind, um bei Übertragung und/oder Empfang mit einem Benutzerterminal (U), welches ein schnurloses oder zelluläres Telefon ist, zu kommunizieren und wobei die Steuereinheit (P) eingerichtet ist, um eine Telefon-Kommunikation über das Benutzerterminal (U) aufzubauen.

2. Haube (10) nach Anspruch 1, **dadurch gekennzeichnet, dass** die Mittel (BT, M, A, D) zum Empfangen und/oder Übertragen der Signale über Funk eingerichtet sind.

3. Haube (10) nach Anspruch 2, wobei die Mittel (BT, M, A, D) eine Hardware- und/oder Software-Kommunikationsschnittstelle (BT), die zum Empfangen und/oder Übertragen der Signale über eine Bluetooth-Technologie eingerichtet ist, aufweisen.

4. Haube (10) nach Anspruch 1 oder 2 oder 3, wobei die Mittel (BT, M, A, D) mindestens ein Mikrofon (M), das zum Empfangen von Schall, insbesondere Sprache eingerichtet ist, aufweisen.

5. Haube (10) nach Anspruch 1 oder 2 oder 3 oder 4, wobei die Mittel (BT, M, A, D) mindestens einen Lautsprecher (A), der zum Aussenden von Schall, insbesondere Sprache eingerichtet ist, aufweisen.

6. Haube (10) nach Anspruch 4 oder 5, wobei die Mittel (BT, M, A, D) eine Hardware- und/oder Software-Audioschnittstelle (D), die zum Aktivieren und/oder Deaktivieren von mindestens einem der Mikrofone (M) und/oder einem der Lautsprecher (A) eingerichtet ist, aufweisen.

7. Haube (10) nach einem der vorhergehenden Ansprüche, **dadurch gekennzeichnet, dass** die Haube eine Steuereinheit (P) des Mikroprozessortyps verbunden mit den Mitteln (BT, M, A, D), die zum Steuern derselben eingerichtet ist, aufweist.

8. Haube (10) nach Anspruch 6 und 7, wobei die Steuereinheit (P), zum Aktivieren des Mikrofons (M) und des Lautsprechers (A) nach dem Beginn einer Telefon-Kommunikation und zum Deaktivieren des Mikrofons (M) und des Lautsprechers (A) nach der Beendigung der Telefon-Kommunikation eingerichtet ist.

9. Haube (10) nach einem der vorhergehenden Ansprüche, wobei die Steuereinheit (P), zum Aufbau einer Telefon-Kommunikation entweder direkt oder direkt über den Benutzerterminal, eingerichtet ist.

10. Haube (10) nach einem der vorhergehenden Ansprüche, wobei die Haube mindestens einen Motor (E), zum Beseitigen der Luft von dem Platz an dem sich die Haube befindet, **dadurch gekennzeichnet, dass** eine Steuereinheit (P), eingerichtet ist, zum Verringern der Rotationsgeschwindigkeit des Motors (E), um Lärm zu vermindern, insbesondere den Lärm, verursacht durch die Rotation des Motors (E) und/oder des Absaugens der Haube, nach einem Aufbau einer Telefon-Kommunikation, eingerichtet ist, aufweist.

11. Haube (10) nach Anspruch 10, **dadurch gekennzeichnet, dass** die Steuereinheit (P), zum Zurücksetzen, insbesondere Erhöhen der Rotationsgeschwindigkeit des Motors (E) nach dem Beenden der Telefon-Kommunikation eingerichtet ist.

12. Haube nach einem der vorhergehenden Ansprüche, wobei die Telefon-Kommunikationssignale, Sprach- und Videosignale für Bildtelefon-Kommunikation sind.

13. Haube nach Anspruch 12, **dadurch gekennzeichnet, dass** die Haube ein Bildanzeigegerät und/oder ein Bilddetektionsgerät, um Bildtelefon-Kommunikationen zu ermöglichen, aufweist.

14. Haube nach einem der vorhergehenden Ansprüche, wobei die Telefon-Kommunikationssignale zusätzlich Daten ähnlich zu Textnachrichten, insbesondere SMS-Nachrichten und/oder Bildnachrichten, insbesondere MMS-Nachrichten, aufweisen.

15. Haube nach Anspruch 14, **dadurch gekennzeichnet, dass** die Haube ein Gerät zum Anzeigen der Nachrichten aufweist.

## Revendications

1. Hotte (10), destinée en particulier à une cuisine de maison, comprenant des moyens (BT, M, A, D) adaptés pour recevoir et/ou émettre des signaux de communication téléphonique, en particulier des signaux à fréquences vocales de communication téléphonique, et une unité de commande (P) connectée aux dits moyens (BT, M, A, D) et adaptés pour les commander, **caractérisée en ce que** lesdits moyens (BT, M, A, D) sont adaptés pour communiquer en émission et/ou en réception avec un terminal utilisateur (U) qui est un téléphone mobile ou un téléphone sans fil, et **en ce que** ladite unité de commande (P) est adaptée pour établir une communication téléphonique par l'intermédiaire du terminal utilisateur (U).

2. Hotte (10) selon la revendication 1, **caractérisée en ce que** lesdits moyens (BT, M, A, D) sont adaptés pour recevoir et/ou émettre lesdits signaux par radio.

3. Hotte (10) selon la revendication 2, dans laquelle lesdits moyens (BT, M, A, D) comportent une interface de communication logicielle et/ou câblée (BT) adaptée pour recevoir et/ou émettre lesdits signaux par l'intermédiaire de la technologie Bluetooth.

4. Hotte (10) selon la revendication 1 ou 2, ou 3, dans laquelle lesdits moyens (BT, M, A, D) comprennent au moins un microphone (M) adapté pour recevoir un signal sonore, en particulier un signal vocal.

5. Hotte (10) selon la revendication 1 ou 2 ou 3 ou 4, dans laquelle lesdits moyens (BT, M, A, D) comportent au moins un haut-parleur (A) adapté pour émettre un son, en particulier la voix.

6. Hotte (10) selon la revendication 4 ou 5, dans laquelle lesdits moyens (BT, M, A, D) comprennent une interface audio logicielle et/ou câblée (D) adaptée pour activer et/ou désactiver ledit au moins un microphone (M) et ledit au moins un haut-parleur (A).

7. Hotte (10) selon l'une quelconque des revendications précédentes, **caractérisée en ce qu'**elle comporte une unité de commande (P) du type à microprocesseur connectée auxdits moyens (BT, M, A, D) et adaptée pour les commander.

8. Hotte (10) selon les revendications 6 et 7, dans laquelle ladite unité de commande (P) est adaptée pour activer ledit microphone (M) et ledit haut-parleur (A) après le commencement d'une communication téléphonique, et désactiver ledit microphone (M) et ledit haut-parleur (A) après la fin de ladite communication téléphonique

9. Hotte (10) selon l'une quelconque des revendications précédentes, dans laquelle ladite unité de commande (P) est adaptée pour établir une communication téléphonique, soit directement, soit directement par l'intermédiaire dudit terminal utilisateur.

10. Hotte (10) selon l'une quelconque des revendications précédentes et comprenant, au moins, un moteur E adapté pour éliminer l'air de l'endroit où la hotte est placée, **caractérisée en ce qu'**elle comprend une unité de commande (P) adaptée pour réduire la vitesse de rotation dudit moteur E afin de réduire son bruit, en particulier le bruit provoqué par la rotation dudit moteur E et/ou par l'aspiration engendrée par la hotte, après qu'une communication téléphonique a été établie.

11. Hotte (10) selon la revendication 10, **caractérisée en ce que** ladite unité de commande (P) est adaptée pour restaurer, en particulier pour augmenter, la vitesse de rotation dudit moteur (E) après la fin de ladite communication téléphonique.

12. Hotte (10) selon l'une quelconque des revendications précédentes, dans laquelle lesdits signaux de communication téléphonique sont des signaux vocaux et vidéo destinés à une communication visiophonique.

13. Hotte selon la revendication 12, **caractérisée en ce qu'**elle comprend un dispositif d'affichage d'image et/ou un dispositif de détection d'image afin de fournir des communications visiophoniques.

14. Hotte selon l'une quelconque des revendications précédentes, dans laquelle lesdits signaux de communication téléphonique comprennent, de plus, des données qui concernent des messages à base de texte, en particulier des messages SMS, et/ou des messages à base d'images, en particulier des messages MMS.

15. Hotte selon la revendication 14, **caractérisée en ce qu'**elle comprend un dispositif permettant de visualiser lesdits messages.
